# EUROPÄISCHE PATENTANMELDUNG

(11) **EP 0 636 350 A1**
(43) Veröffentlichungstag der Anmeldung: **01.02.1995**
(21) Anmeldenummer: 94202164.3
(22) Anmeldetag: 25.07.1994
(51) Int. Cl.: A61C 17/22, A46B 15/00

(54) **Zahnbürste**

(30) Priorität: 30.07.1993 BE 9300795
(71) Anmelder: PHILIPS ELECTRONICS N.V., 5621 BA Eindhoven (NL)
(72) Erfinder: Müller, Ingo, NL-5656 AA Eindhoven (NL); Schneider, Norbert, NL-5656 AA Eindhoven (NL); Krammer, Erich, NL-5656 AA Eindhoven (NL)
(74) Vertreter: Bos, Kornelis Sjoerd

(57) **Zusammenfassung**

Zahnbürste mit zwei zueinander schwenkbaren Gehäuseteilen (1,2), wobei hiervon ein erstes Gehäuseteil (1) als Griff dient und eine Antriebseinheit (4) zum Antreiben einer Antriebswelle (5) umfaßt und ein zweites Gehäuseteil (2) mit einem von der Antriebswelle antreibbaren Bürstenkopf (3) versehen ist und das zweite Gehäuseteil (2) in bezug auf die Antriebswelle (5) um eine Scharnierachse (6) schwenken kann. Um den Benutzer während des Putzens vor zu starkem Druck zu warnen, ist die Zahnbürste mit einer Federkonstruktion mit mindestens einer Feder (14) versehen, die zwischen dem zweiten Gehäuseteil (2) und der Antriebswelle (5) wirkt, wobei beim Gebrauch der Zahnbürste das zweite Gehäuseteil (2) in bezug auf das erste Gehäuseteil (1) um die Scharnierachse (6) gegen eine von der Feder (14) ausgeübte Andruckkraft schwenkbar ist und die Feder beim Überschreiten einer bestimmten Schwelle in der Andruckkraft schnappt und die Scharnierachse sich im zweiten Gehäuseteil befindet und zugleich zwischen der Antriebswelle und dem zweiten Gehäuseteil einen Teil der mechanischen Kupplung bildet.

## Beschreibung

Die Erfindung betrifft eine Zahnbürste mit zwei zueinander schwenkbaren Gehäuseteilen, wobei ein erstes ihrer Gehäuseteile als Griff dient und eine Antriebseinheit zum Antreiben einer Antriebswelle umfaßt und ein zweites ihrer Gehäuseteile mit einem von der Antriebswelle antreibbaren Bürstenkopf versehen ist und das zweite Gehäuseteil in bezug auf die Antriebswelle um eine Scharnierachse schwenken kann.

Eine derartige Zahnbürste ist aus US-A-3.859.684 bekannt.

Diese bekannte Zahnbürste hat eine rotierend antreibbare Bürste, bei der die Bürstenachse mittels eines Kardangelenks mit einer in einem ersten Gehäuseteil liegenden Antriebswelle schwenkbar verbunden ist. Die Bürstenachse ist von einem zweiten Gehäuseteil umgeben, das in dem ersten Gehäuseteil steckt. Zwischen den Gehäuseteilen befindet sich eine Schaltfeder, die während des Gebrauchs beim Schwenken des zweiten Gehäuseteils in bezug auf das erste Gehäuseteil den Motor einschaltet.

Beim Putzen der Zähne spielt die Kraft, mit der die Bürste gegen das Gebiß drückt, eine wichtige Rolle. Um Zahnbelag von den Zähnen zu lösen, ist eine bestimmte Andruckkraft erforderlich. Da beim Putzen die Bürste jedoch auch beispielsweise das Zahnfleisch und den Zahnhals berührt, darf die Andruckkraft nicht zu groß sein. Die Zahnbürste nach US-A-3.859.684 sieht einen entsprechenden Schutz nicht vor.

Der Erfindung liegt die Aufgabe zugrunde, eine einfache Konstruktion einer Zahnbürste zu verschaffen, die mit einer Schutzvorrichtung versehen ist, mit der der Benutzer gewarnt wird, wenn mit zu starkem Druck geputzt wird.

Hierzu ist die Erfindung dadurch gekennzeichnet, daß die Zahnbürste mit einer Federkonstruktion mit mindestens einer Feder versehen ist, die zwischen dem zweiten Gehäuseteil und der Antriebswelle wirkt, wobei beim Gebrauch der Zahnbürste das zweite Gehäuseteil in bezug auf das erste Gehäuseteil um die Scharnierachse gegen eine von der Feder ausgeübte Andruckkraft schwenkbar ist und die Feder beim Überschreiten einer bestimmten Schwelle für die Andruckkraft schnappt und die Scharnierachse sich im zweiten Gehäuseteil befindet und zugleich mindestens einen Teil der mechanischen Kupplung zwischen der Antriebswelle und dem zweiten Gehäuseteil bildet.

Mit Schnappen ist eine plötzlich auftretende Beschleunigung oder Verzögerung gemeint. Das Schnappen stellt für den Benutzer eine Warnung dar, daß mit zu starkem Druck geputzt wird.

Außer der Warnung bei zu starkem Druck hat die Zahnbürste noch einen Vorteil, nämlich, daß wegen der Lage der Scharnierachse in dem zweiten Gehäuseteil die Abdichtung der durch eine Wand des ersten Gehäuseteils verlaufenden Antriebswelle einfach und zuverlässig sein kann, weil die Antriebswelle bezüglich der Wand keine Schwenkbewegung ausführt, sondern nahezu ausschließlich eine Translations-oder Rotationsbewegung.

Es sei bemerkt, daß Zahnbürsten mit zwei schwenkbaren Gehäuseteilen und mit einer Federkonstruktion, bei der die Feder zwischen den Gehäuseteilen wirkt und bei der ebenfalls beim Gebrauch der Zahnbürste das zweite Gehäuseteil bezüglich des ersten Gehäuseteils um eine Scharnierachse gegen eine von der Feder ausgeübte Kraft schwenkbar ist, wobei die Feder bei Überschreiten einer bestimmten Schwelle für die Andruckkraft schnappt, bekannt sind. Bei diesen Zahnbürsten ist jedoch die Scharnierachse im ersten Gehäuseteil in den Antriebsmechanismus integriert, was zu einer kostspieligen, komplizierten Konstruktion führt.

Eine bevorzugte Ausführungsform der Zahnbürste ist dadurch gekennzeichnet, daß das zweite Gehäuseteil mit einem Kupplungsstück als Teil der mechanischen Kupplung versehen ist, das in bezug auf das zweite Gehäuseteil um die Scharnierachse schwenkbar ist und daß das zweite Gehäuseteil mit Hilfe des Kupplungsstücks lösbar mit der Antriebswelle gekuppelt ist. Hierdurch hat der Benutzer die Möglichkeit, eine unbrauchbar gewordene Bürste durch ein neues, relativ preiswertes Gehäuseteil mit Bürstenkopf zu ersetzen. Auch hat der Benutzer die Möglichkeit, beispielsweise vorübergehend, die Andruckkraft zu verändern, indem er ein anderes Gehäuseteil mit Bürstenkopf verwendet, dessen Federkonstruktion eine steifere oder weniger steife Feder aufweist.

Eine weitere bevorzugte Ausführungsform der Zahnbürste ist dadurch gekennzeichnet, daß die Federkonstruktion mit einer in dem zweiten Gehäuseteil angebrachten Platte versehen ist, wobei die Platte eine Öffnung hat, durch die die Antriebswelle verläuft, und die Platte mit federnden Armen versehen ist, gegen die die Antriebswelle federnd anliegt, und mit einem Anschlag, gegen den die Antriebswelle nach dem Schnappen federnd anliegt. Hiermit wird eine sehr einfache, preiswerte und wirkungsvolle Konstruktion erhalten.

Noch eine weitere bevorzugte Ausführungsform der Zahnbürste ist dadurch gekennzeichnet, daß eine zweite Feder vorhanden ist, deren eines Ende fest mit dem Kupplungsstück verbunden ist und deren anderes Ende über einem Nocken des zweiten Gehäuseteils oder der Federplatte schnappt, wenn die Schwelle für die Andruckkraft erreicht ist. Das Schnappen, das mit einem klickenden Geräusch einhergeht, wird durch eine gesonderte preiswerte Feder erhalten, die beispielsweise mit dem Kupplungsstück zusammen aus einem einzigen Kunststoffteil gefertigt sein kann.

Vorzugsweise kehrt nach Überschreiten der Schwelle das zweite Gehäuseteil bei Verringerung der Andruckkraft in seine ursprüngliche Lage zurück.

In einer weiteren Ausführungsform der Zahnbürste ist die Platte lösbar in dem zweiten Gehäuseteil befestigt. Hierdurch ist es möglich, auf einfache Weise eine Platte mit einem bestimmten Schwellenwert für die Andruckkraft gegen eine Platte mit einem anderen Schwellenwert auszutauschen.

Ein Ausführungsbeispiel der Erfindung ist in der Zeichnung dargestellt und wird im folgenden näher beschrieben. Es zeigen:

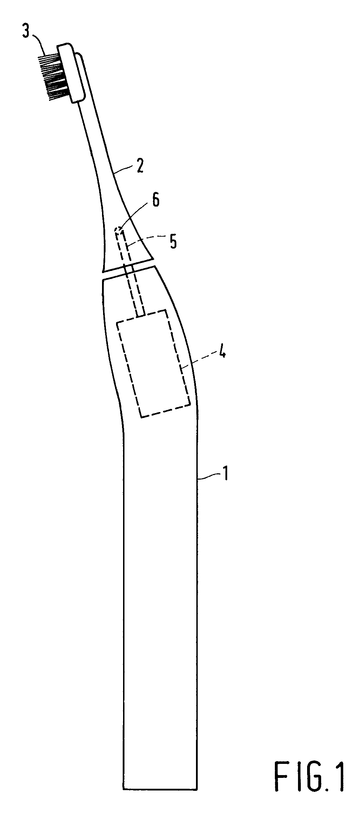

Figur 1 eine Ansicht der Zahnbürste,
Figur 2 einen Teilquerschnitt der Zahnbürste aus Figur 1 in einer Lage, in der nicht geputzt wird,
Figur 3 einen Teilquerschnitt der Zahnbürste wie in Figur 2, aber bei geschwenkter Stellung des zweiten Gehäuseteils, wobei der Schwellenwert der Andruckkraft überschritten ist,
Figur 4 eine perspektivische Teilansicht des zweiten Gehäuseteils mit einem Kupplungsstück und der Platte in auseinandergenommenem Zustand und
Figur 5 die Platte mit den federnden Armen und der Antriebswelle.

Die erfindungsgemäße Zahnbürste hat zwei zueinander schwenkbare Gehäuseteile 1 und 2. Das erste Gehäuseteil 1 dient als Griff, das zweite Teil 2 ist mit einem Bürstenkopf versehen, der mit dem zweiten Gehäuseteil zusammen aus einem Stück gefertigt sein kann oder mit dem zweiten Gehäuseteil lösbar verbunden werden kann. Das erste Gehäuseteil 1 ist mit einer Antriebseinheit 4 zum Antreiben einer Antriebswelle 5 versehen. Das Gehäuseteil 2 ist mittels einer Scharnierachse 6 mit der Antriebswelle 5 schwenkbar verbunden.

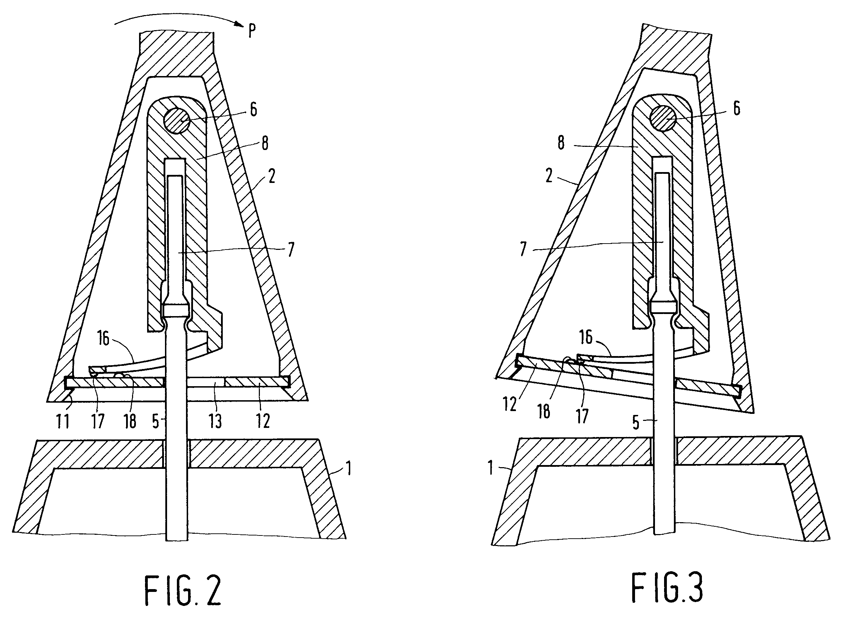

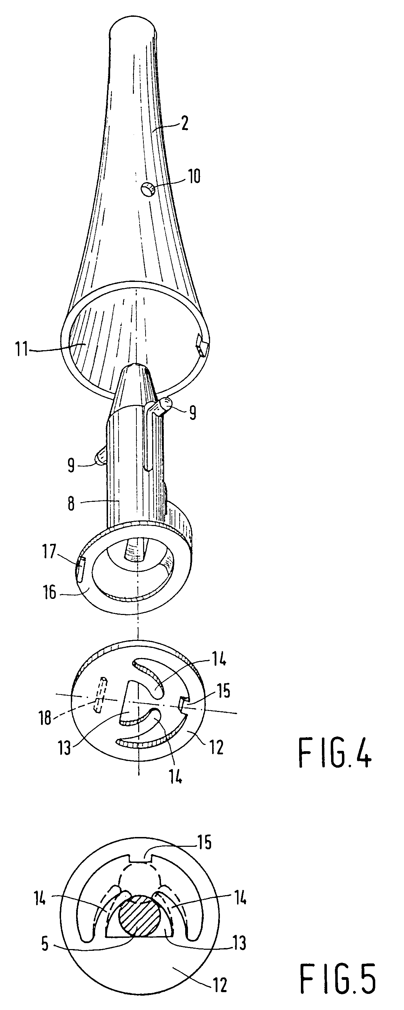

Wie in den Fig. 2-5 wiedergegeben, ist das Ende 7 der Antriebswelle 5 mit einem Kupplungsstück 8 versehen. Dieses Kupplungsstück ist in dem zweiten Gehäuseteil 2 um die Scharnierachse 6 schwenkbar gelagert. Hierzu ist das Kupplungsstück mit Achszapfen 9 versehen, die in entsprechende Öffnungen 10 in der Wandung des zweiten Gehäuseteils 2 passen. Mit Hilfe des Kupplungsstücks 8 ist das zweite Gehäuseteil mit der Antriebswelle 5 gekuppelt. Diese Kupplung ist vorzugsweise lösbar. Das zweite Gehäuseteil hat ein zur dem ersten Gehäuseteil zugewandten Seite offenes Ende 11. In diesem offenen Ende ist eine Platte 12 angebracht, die mit einer Öffnung 13 versehen ist, durch die die Antriebswelle 5 verläuft. Die Platte 12 ist mit zwei federnden Armen 14 versehen. Die Antriebswelle 5 liegt unter Federspannung gegen diese federnden Arme 14 an. Die Platte 12 ist ferner mit einem Anschlag 15 für die Antriebswelle versehen (siehe auch Fig. 5).

In Fig. 2 wird die Zahnbürste in einer Stellung gezeigt, in der nicht geputzt und auf den Bürstenkopf 3 keine Kraft ausgeübt wird. Die federnden Arme 14 üben eine gewisse Vorspannkraft auf die Antriebswelle 5 aus, wodurch das Gehäuseteil 2 mit dem Bürstenkopf in der Lage von Fig. 2 gehalten wird. Während des Putzens wird auf das zweite Gehäuseteil 2 eine Kraft ausgeübt, die das zweite Gehäuseteil in eine Richtung P im Uhrzeigersinn drückt. Die federnden Arme 14 werden von der Antriebswelle 5 nach außen gedrückt. Beim Überschreiten einer gewissen Schwelle für die Andruckkraft schnappt die Antriebswelle 5 zwischen die federnden Arme 14 hindurch und kommt gegen den Anschlag 15 zu liegen (Fig. 3 und 5). Dieses Schnappen geht mit einer plötzlichen Bewegung des zweiten Gehäuseteils mit dem Bürstenkopf einher und gibt dadurch dem Benutzer ein Signal, daß die Andruckkraft zu groß ist. Der Benutzer kann dann das zweite Gehäuseteil mit der Hand in die in Fig. 2 angegebene Lage zurücksetzen.

Es ist auch möglich, den federnden Armen 14 eine solche Form zu geben, daß die Antriebswelle 5 (oder die federnden Arme) nicht schnappt, sondern nur eine zunehmende Federkraft der federnden Arme beim weiteren Schwenken erfährt. Um den Benutzer doch bei einer zu hohen Andruckkraft zu warnen, ist das Kupplungsstück 8 mit einer zweiten Feder 16 versehen. Diese zweite, ringförmige Feder ist an dem Kupplungsstück 8 befestigt oder kann zusammen mit dem Kupplungsstück aus einem Stück gefertigt sein. Die Feder 16 hat eine Nase 17, die gegen die Oberfläche der Platte 12 federnd anliegt. In der Oberfläche der Platte ist ein Nocken 18 vorhanden, der mit der Nase 17 der Feder 16 zusammenwirken soll. In dem Moment, in dem eine zu große Andruckkraft erreicht wird, schnappt die Nase 17 der zweiten Feder über dem Nocken 18 ein, was der Benutzer als Signal bei zu großem Druck wahrnimmt. Durch Verringerung des auf das Gebiß ausgeübten Druckes gleitet die Nase wieder über den Nocken zurück. Der Benutzer kann daher mit Putzen fortfahren und wird ein nächstes Mal bei zu großem Druck wieder gewarnt. Die Nase 17 der Feder 16 könnte natürlich auch gegen eine mit einem Nocken versehene Wandung des Gehäuseteils 2 anliegen.

Die Platte 12 kann in dem zweiten Gehäuseteil herausnehmbar befestigt sein. Dies bietet die Möglichkeit, Platten mit unterschiedlicher Steife der federnden Arme und damit verschiedene Schwellenwerte für die Andruckkraft zu verwenden, beispielsweise für Kinder und Erwachsene mit empfindlichem Zahnfleisch eine Platte mit einem Schwellenwert zwischen 1,5 und 2,5 N und für Erwachsene mit normalem Zahnfleisch zwischen 2,5 und 3,5 N.

## Patentansprüche

1. Zahnbürste mit zwei zueinander schwenkbaren Gehäuseteilen (1,2), wobei ein erstes ihrer Gehäuseteile (1) als Griff dient und eine Antriebseinheit (4) zum Antreiben einer Antriebswelle (5) umfaßt und ein zweites ihrer Gehäuseteile (2) mit einem von der Antriebswelle antreibbaren Bürstenkopf (3) versehen ist und das zweite Gehäuseteil (2) in bezug auf die Antriebswelle (5) uni eine Scharnierachse (6) schwenken kann, dadurch gekennzeichnet, daß die Zahnbürste mit einer Federkonstruktion mit mindestens einer Feder (14) versehen ist, die zwischen dem zweiten Gehäuseteil (2) und der Antriebswelle (5) wirkt, wobei beim Gebrauch der Zahnbürste das zweite Gehäuseteil (2) in bezug auf das erste Gehäuseteil (1) um die Scharnierachse (6) gegen eine von der Feder (14) ausgeübte Andruckkraft schwenkbar ist und die Feder beim Überschreiten einer bestimmten Schwelle für die Andruckkraft schnappt und die Scharnierachse sich im zweiten Gehäuseteil befindet und zugleich mindestens einen Teil der mechanischen Kupplung zwischen der Antriebswelle und dem zweiten Gehäuseteil bildet.

2. Zahnbürste nach Anspruch 1, dadurch gekennzeichnet, daß das zweite Gehäuseteil (2) mit einem Kupplungsstück (8) als Teil der mechanischen Kupplung versehen ist, welches Kupplungsstück (8) um die Scharnierachse (6) schwenkbar ist und daß das zweite Gehäuseteil mit Hilfe des Kupplungsstücks lösbar mit der Antriebswelle (5) gekuppelt ist.

3. Zahnbürste nach Anspruch 1, dadurch gekennzeichnet, daß die Federkonstruktion mit einer in dem zweiten Gehäuseteil (2) angebrachten Platte (12) versehen ist, wobei die Platte eine Öffnung (13) hat, durch die die Antriebswelle (5) verläuft, und die Platte mit federnden Armen (14) versehen ist, gegen die die Antriebswelle federnd anliegt, und mit einem Anschlag (15), gegen den die Antriebswelle nach dem Schnappen federnd anliegt.

4. Zahnbürste nach Anspruch 2 oder 3, dadurch gekennzeichnet, daß eine zweite Feder (16) vorhanden ist, deren eines Ende fest mit dem Kupplungsstück (8) verbunden ist und deren anderes Ende über einem Nocken (18) des zweiten Gehäuseteils (2) schnappt, wenn die Schwelle für die Andruckkraft erreicht ist.

5. Zahnbürste nach Anspruch 4, dadurch gekennzeichnet, daß nach Überschreiten der Schwelle bei Verringerung der Andruckkraft das zweite Gehäuseteil (2) in seine ursprüngliche Lage zurückkehrt.

6. Zahnbürste nach Anspruch 3, dadurch gekennzeichnet, daß die Platte (12) lösbar in dem zweiten Gehäuseteil (2) befestigt ist.
